# FASCICULE DE BREVET EUROPEEN

(11) **EP 0 776 154 B1**
(45) Date de publication et mention de la délivrance du brevet: **21.10.1998**
(21) Numéro de dépôt: 95927797.1
(22) Date de dépôt: 18.08.1995
(51) Int. Cl.: A01G 1/04

(54) **SUPPORT POUR LA CULTURE DES CHAMPIGNONS, FAVORISANT LA CROISSANCE DE MYCELIUM ET LE DEVELOPPEMENT DES CARPOPHORES, AINSI QUE SON PROCEDE D'OBTENTION**
UNTERLAGE FÜR DIE PILZZUCHT, DIE DAS PILZMYCELWACHSTUM UND DIE FRUCHTKÖRPERENTWICKLUNG FÖRDERT, UND VERFAHREN ZU IHRER HERSTELLUNG
SUPPORT FOR GROWING MUSHROOMS, ENHANCING MUSHROOM SPAWN GROWTH AND CARPOPHORE DEVELOPMENT AND METHOD OF OBTAINING SAID SUPPORT

(30) Priorité: 18.08.1994 FR 9410194
(43) Date de publication de la demande: 04.06.1997
(73) Titulaire: S.A. ROYAL CHAMPIGNON, 49427 Saumur Cédex (FR)
(72) Inventeur: BASCOUGNET, Bernard, F-64200 Biarritz (FR)
(74) Mandataire: Ahner, Francis
(86) Numéro de dépôt international: FR9501099
(87) Numéro de publication internationale: WO9605720

(56) Documents cités:
- EP-A- 0 284 421
- WO-A-88/01472
- FR-A- 1 438 817
- FR-A- 2 071 058
- FR-A- 2 258 782
- DATABASE WPI Week 9444, Derwent Publications Ltd., London, GB; AN 94-356437 [44] & SU,A,1 824 092 (KAMEN I SILIKATY RES. PRODN. ASSOC.)
- DATABASE WPI Week 8239, Derwent Publications Ltd., London, GB; AN 82-83121E [39] & SU,A,884 633 (AS. ARMN. GEN. INORG.)

## Description

L'invention a pour objet un support pour la culture des champignons, favorisant la croissance de mycélium et le développement des carpophores, ainsi que son procédé d'obtention.

Elle vise en particulier un support propre à favoriser la croissance de mycélium et le développement des carpophores, contenant :
i) un substrat inerte et poreux se présentant sous forme de granulés, tel que de la perlite expansée,
ii) une phase nutritive apportant notamment les éléments chimiques indispensables à la croissance mycélienne et au développement des carpophores.

Par le terme "croissance de mycélium", on entend, au sens de la présente invention, la croissance de la partie végétative du champignon. Celle-ci se présente en général, sous forme de filaments blancs réticulés appelés mycélium. Chez les espèces supérieures, le mycélium engendre par son développement, couramment appelé fructification, une masse extérieure à lui-même, qui constitue le champignon tel qu'il est consommé lorsqu'il est comestible.

Par le terme "carpophore", on entend, au sens de la présente invention, la partie sporifère, non souterraine, des champignons supérieurs. Il s'agit en fait de la partie usuellement appelée "champignon".

Par le terme "support", on entend, au sens de la présente invention, la matière qui, associée à la semence pure de champignon - ou encore à la première semence - est utilisée afin de favoriser la croissance mycélienne et le développement des carpophores. Ce support est couramment appelé "compost" par les champignonistes.

On connaît différents supports que l'on sait associer avec de la semence pure souvent constituée par du "blanc de champignon". A titre d'exemple, on peut citer le fumier de cheval, le fumier synthétique à base de paille de céréale, les tiges et pétioles de feuilles de tabac ou encore la ficelle de chanvre.

Cependant, ces supports donnent naissance à des mycélium qui présentent une structure fortement compacte, ramassée et fibreuse. En pratique, les fibres sont enchevêtrées entre elles et forment des touffes épaisses. Si l'on souhaite que les mycélium se transforment en carpophores avec un taux de transformation acceptable, il est nécessaire de desserrer les fibres pour rendre l'ensemble moins dense. Or, il s'agit à d'un travail long et presque exclusivement manuel. En définitive, ce type de support nécessite de la main d'oeuvre et donc un coût supplémentaire. Et pour cause, le support donne naissance à une structure trop dense.

Afin de pallier cet inconvénient, on a eu l'idée de réaliser des supports constitués d'éléments solides de faible dimension. On a pensé que ces éléments solides pourraient par exemple être des grains sur lesquels pourraient pousser les mycélium.

Ceux-ci seraient ainsi mieux répartis dans le compost que dans le cas précédent. En effet, on a pense que les mycélium pourraient pousser de manière satisfaisante sur les grains solides ou dans les grains solides. Il y aurait ainsi forcément séparation des touffes de mycélium.

Ainsi, on a mis en oeuvre des grains de céréales, notamment des grains de blé, de seigle, de maïs et de millet. De cette manière, on a effectivement obtenu des mycélium à la surface des grains. On a également obtenu, comme prévu, une structure moins fibreuse que celle résultant des matières précédentes.

Cependant, à l'usage, il est apparu que ce type de support présentait aussi des inconvénients. Tout d'abord, il s'est avéré que les mycélium ne poussent pas dans les grains de cérérales : ils les enrobent. Or, cela est négatif dans la mesure où le support en question va forcément donner lieu à une faible densité de mycélium.

En définitive, ce support donne lieu à une quantité de filaments mycéliens plus faible que celle obtenue avec les supports précédents. La comparaison s'entend naturellement pour une même quantité de blanc de champignon ensemencé.

Ensuite, ce support présente d'autres inconvénients qui tiennent cette fois dans sa préparation. En effet, il est nécessaire de conférer aux grains un taux d'humidité précis et adéquat à l'utilisation visée. Pour cela, on fait cuire les grains à température suffisamment élevée et en présence d'eau.

Toutefois, la cuisson provoque une agglomération des grains qui paraissent collés entre eux. Il est donc nécessaire de les séparer avant de réaliser le compost.

Il s'agit là d'une opération complémentaire et par là même d'une opération coûteuse en temps et en main d'oeuvre.

Enfin, ce support présente un autre inconvénient particulièrement majeur qui tient dans sa difficulté à être reproductible. En effet, les céréales proviennent à chaque fois de cultures différentes où elles sont récoltées à des moments différents de l'année. Par conséquent, leur composition est variable, ce qui nécessite dans la pratique des adaptations permanentes tant sur le plan quantitatif que qualitatif.

Pour remédier à ces inconvénients, on a remplacé les grains de céréales par des particules minérales. En effet, on a souhaité mettre en valeur certaines propriétés de telles particules. On a notamment souhaité exploiter le fait que leur composition était toujours identique et qu'elles restent séparées et n'adhérent pas entre elles.

L'une des premières particules minérales utilisées a été le mica. A titre d'illustration, on peut se référer au brevet FR 1 438 817 qui décrit un support pour culture de mycélium de champignons notamment de champignons de couches "psaliota Hortensis". Le support décrit dans ce brevet se compose d'un agrégat de particules constituées par un empilement de feuillets très minces de mica. Ce support présente un aspect granulé ayant un fort pouvoir de rétention d'eau et une texture aérée.

Cependant, avant d'être utilisé pour la croissance des mycélium, le mica doit être traité thermiquement. Le traitement thermique consiste à porter le mica à une température de 1000°C. Or, ce traitement thermique a pour effet, d'une part, de fragiliser le mica et, d'autre part, de le désagréger. Par suite, il supporte difficilement les contraintes auxquelles il est soumis au contact du mycélium. Par suite encore, il a tendance à former une bouillie. Donc, il assure globalement trop médiocrement le contrôle de l'humidité et des échanges gazeux entre le mycélium et son environnement.

Cela se traduit généralement par une croissance du mycélium difficilement maîtrisable.

Afin de remédier à ces inconvénients, on a substitué le mica par un autre constituant minéral, à savoir la perlite.

Par "perlite", on entend ici la roche volcanique appartenant à la famille des feldpaths qui est en réalité un alumino-silicate.

A titre d'illustration de l'utilisation de la perlite pour la culture de mycélium, on peut se référer au brevet FR 2 071 056.

Plus précisément, ce brevet décrit un support pour la culture de mycélium qui comprend de la perlite et un milieu nutritif.

Concernant la perlite, il est simplement indiqué, dans ce document et en toute généralité, que celle-ci est de la perlite expansée. En d'autres termes, il s'agit de perlite ayant subi un traitement thermique à température élevée. Cela étant, rien n'est indiqué en ce qui concerne les propriétés physiques ou chimiques de la perlite mise en oeuvre. Il apparaîtrait même que n'importe quelle perlite peut être utilisée et que le résultat en terme de rendement en mycélium sera toujours le même. On ne sait qu'un seul point : la perlite est utilisée pour absorber l'humidité du milieu nutritif. En somme, à la lecture de ce document, on pourrait penser que les propriétés physiques et chimiques de la perlite sont accessoires et qu'elles n'ont pas à être considérées.

Concernant le milieu nutritif, il est indiqué très globalement dans ce document que ce dernier comprend au moins un des éléments choisis parmi le fumier, les substances végétales et les hydrates de carbone. On ne trouve à aucun moment, dans ce document, l'intérêt de mettre en oeuvre de tels composés. On ne sait nullement à quoi ils servent et s'ils peuvent être substitués ou non par d'autres éléments susceptibles d'apporter les mêmes éléments nutritifs. En somme, ce milieu nutritif gagnerait à être mieux maîtrisé, expliqué et compris afin d'être optimisé.

Tout au plus, peut-on tirer de ce document qu'une idée pour constituer un support de culture de mycélium peut être d'utiliser de la perlite et une solution nutritive. Reste à savoir cependant quels types de perlite et de solution nutritive.

Il existe donc un besoin d'étudier de tels supports pour les optimiser et les rendre industriellement exploitables.

Il est bon de faire remarquer encore que l'ensemble des supports énumérés ci-dessus vise essentiellement la croissance du mycélium. Par contre, il ne sont pas à proprement parler directement utilisables pour le développement des carpophores. En d'autres termes, leur utilisation s'arrête dès que le mycélium a atteint un stade de croissance donnée. Bien sûr, on peut aussi utiliser ces supports pour le développement du carpophore. Néanmoins, le rendement est souvent considéré comme étant très faible et on préfère modifier le milieu. En conséquence de quoi, il serait également profitable de mettre au point un support qui soit utilisable à la fois pour la croissance du mycélium et pour le développement des carpophores.

L'invention a pour but de fournir un support destiné à la croissance du mycélium et au développement des carpophores comprenant un substrat et une solution nutritive, ce support étant plus performant que ceux qui existent déjà. Tout particulièrement, ce support présente les avantages suivants :
. son coût est faible, d'une part, puisque la matière première utilisée est bon marché, dans la mesure surtout où les ressources sont illimitées et, d'autre part, puisque sa réalisation est assez simple,
. il est reproductible,
. sa composition est parfaitement définie,
. il est stable dans le temps,
. il présente une résistance mécanique suffisante et,
. il est utilisable et performant à la fois pour la croissance du mycélium et le développement des carpophores.

On y parvient, selon l'invention, en ce que le substrat inerte et poreux possède les propriétés suivantes:
(1) il se présente sous un état pratiquement anhydre,
(2) il présente une densité inférieure à environ 0,2 et de préférence voisine de 0,1,
(3) il présente une granulométrie comprise entre 2 et 5 mm, et de préférence comprise entre 3 et 4 mm,
(4) il comporte une proportion relative de vides comprise entre 60 et 90 % en volume.

Grâce au support selon l'invention, les mycélium réussissent à croître dans un endroit protégé, où ils sont donc moins vulnérables, à savoir à l'intérieur des granulés.

L'obtention des mycélium protégés poussant à l'intérieur du grain, est en revanche quasiment impossible dans des grains de céréales utilisés comme inoculum. En effet, dans ces conditions, le mycélium croît uniquement en surface ; il s'agit en quelque sorte pratiquement d'un enrobage. Le support selon l'invention donne donc lieu à une première amélioration notable.

Qui plus est, les propriétés du support selon l'invention, notamment celles du substrat, sont parfaitement définies. Il en résulte donc un fait important en pratique : le support est reproductible. En d'autres termes, grâce à l'invention, il est possible de fournir un support de qualité toujours pratiquement identique, propre à apporter une quantité définie d'éléments nécessaires à la croissance du mycélium et au développement des carpophores.

Le support selon l'invention est en outre stable dans le temps.

En particulier, le support selon l'invention conserve essentiellement l'intégralité de ses propriétés mécaniques lors de la croissance du mycélium. A titre d'exemple, on peut invoquer le fait que, lors de sa croissance, même si le mycélium exerce une force toujours croissante sur le substrat, ce dernier réussit à résister.

Le support selon l'invention comprend un substrat inerte et poreux présentant quatre caractéristiques. D'abord, le substrat se présente sous un état pratiquement anhydre. Cette première caractéristique est essentielle puisque la Demanderesse a montré que la croissance du mycélium et le développement du carpophore étaient peu rentables d'un point de vue industriel dans des conditions mettant en oeuvre un tel substrat non pratiquement anhydre. En effet, dans de telles conditions, le mycélium se développe plus lentement, sa qualité est nettement inférieure et le rendement est moindre.

Ensuite, le substrat inerte et poreux présente une densité inférieure à environ 0,2 et de préférence voisine de 0,1. Là encore, cette caractéristique est fondamentale d'un point de vue industriel. En effet, même si l'on peut encore utiliser un substrat de densité plus élevée, la croissance de mycélium devient trop faible pour envisager la culture d'un point de vue pratique et économique. De ce fait, on évitera l'utilisation d'un support présentant une densité supérieure à environ 0,2 pour des applications industrielles.

Par ailleurs, la troisième caractéristique du substrat inerte et poreux concerne sa granulométrie. Là encore, la Demanderesse a montré qu'une valeur de granulométrie comprise entre 2 et 5 mm était favorable. En effet, lorsque la granulométrie est inférieure à 2 mm, on pense que le mycélium perd une partie significative de son potentiel fructifère. Par conséquent, il a de la difficulté à croître. Il a aussi de la difficulté à se développer en carpophores présentant les propriétés standards souhaitées. En revanche, lorsque la taille des granulés est supérieure à 5 mm, on observe une différence d'occupation des grains. C'est pourquoi, il est important d'utiliser un substrat présentant la granulométrie indiquée.

Enfin, la quatrième caractéristique du substrat inerte et poreux concerne la proportion relative de vides. Autrement dit, cette caractéristique est liée à la porosité du substrat. Là encore, la Demanderesse a cerné l'intervalle exploitable d'un point de vue industriel.

Selon un mode de réalisation préférentiel du support selon l'invention, le substrat inerte et poreux présente une proportion relative de vides voisine de 70 % en volume.

De préférence, le substrat inerte et poreux présente un pourcentage d'humidité résiduelle inférieur à environ 5 % en poids.

Grâce à un tel support, l'implantation du mycélium est importante, et ce dernier se trouve effectivement protégé.

Avantageusement, la phase nutritive comprend les constituants liquides principaux suivants qui sont absorbés par le substrat :
(1) de l'eau, dans une proportion relative en poids comprise entre 70 et 90 %,
(2) une source de carbone, dans une proportion relative en poids comprise entre 5 et 20 %,
(3) une source d'azote, dans une proportion relative en poids comprise entre 1 et 10 %,
(4) de la matière grasse, dans une proportion relative en poids comprise entre 1 et 5 %, et
(5) de l'oxyde de calcium, dans une proportion relative en poids pouvant aller jusqu'à environ 1 %.

Les exigences trophiques des Basidiomycètes supérieurs sont encore mal connues. Si des croissances mycéliennes sont relativement réalisables, l'obtention de carpophores reste aléatoire pour la plupart des espèces et, en particulier, pour les espèces comestibles.

Des recherches physiologiques précises sur la nutrition ne sont possibles que si l'on dispose de milieux synthétiques de composition simple et bien définie.

Malgré la diversité des compositions nutritives retenues, conséquence de l'empirisme qui règne encore dans ce domaine, il existe des analogies entre les exigences des différentes espèces étudiées. Jusqu'à présent, ces compositions nutritives rendent possible la fructification de pleurotus et lentinus, mais leur composition n'est pas nécessairement optimale.

Sans être limité à cette interprétation, on peut dire que l'eau est le premier constituant essentiel à la vie et à la croissance du mycélium et au développement du carpophore, comme elle l'est pour tous les êtres vivants. Par conséquent, on comprend qu'elle soit effectivement présente dans la phase nutritive.

Tandis que les végétaux verts au soleil s'alimentent en carbone par voie photosynthétique aux dépens du gaz carbonique, les champignons, végétaux hétérotrophes, sont dépourvus de chlorophyle et doivent emprunter le carbone à des matières organiques.

C'est pourquoi le carbone est présent dans la phase nutritive du support selon l'invention. Le carbone est à la fois nécessaire pour la croissance du mycélium et pour le développement des carpophores.

L'azote fait aussi partie des éléments essentiels à la croissance du champignon. L'azote peut être fourni sous forme organique par des protéines.

On pourra utiliser, par exemple, des protéines bon marché et courantes. Cela étant, l'azote peut être fourni soit sous forme organique, soit sous forme minérale.

Lorsque l'azote est fourni sous forme organique, on utilise souvent des acides aminés. Lorsqu'il est fourni sous forme minérale, on peut utiliser la forme ammoniacale avec le tartrate d'ammonium qui possède également un pouvoir tampon.

Avantageusement, la source de carbone est un hydrate de carbone, de préférence un hydrate de carbone provenant de la dégradation de l'amidon.

En fait, cette source de carbone est souvent un ose comme de la dextrine. Le choix de l'utilisation de la dextrine a été orienté, d'une part, par les difficultés de stérilisation de l'amidon (formation d'empoi d'amidon) et, d'autre part, par le fait que l'extrémité de la chaîne constituée par du glucose ne permet pas son utilisation à des concentrations importantes pour constituer des réserves suffisantes du fait d'une trop grande pression osmotique. Cette limitation constitue, en l'occurrence, un avantage.

Préférentiellement, il s'agit d'une dextrine de formule générique (C₆ H₁₀ 0₅)ₙ H₂0, n étant un entier. Cette dextrine est déterminante pour faciliter la croissance du mycélium.

Cette dextrine provient de l'amidon (C₆ H₁₀ 0₅)ₙ hydrolysé ; elle présente l'intérêt d'être directement assimilable par le mycélium.

Plus préférentiellement, la source d'azote contient au moins un acide aminé provenant de préférence d'un hydrolysat de protéines végétales, notamment d'un hydrolysat de protéines de soja.

En réalité, l'important, dans le choix de la source d'acides aminés, est de veiller à ce que cette source apporte effectivement les acides aminés nécessaires à la nutrition du mycélium et du carpophore.

Là encore, sans se limiter, on propose ci-après la liste des acides aminés apparaissant comme étant nécessaires. Il s'agit surtout de ceux compris dans le groupe comprenant :
l'alanine
l'arginine
l'acide aspartique
l'acide glutamique
la glycine
l'histidine
l'isolucine
la leucine
la lysine
la proline
la sérine
la thréonine
le tryptophane
la tyrosine.

En fait, lorsque l'on choisit une source d'acides aminés, on peut faire en sorte d'apporter l'ensemble des éléments ci-dessus. Ainsi, lorsqu'on choisit une source naturelle, si cette dernière n'apporte pas à elle seule l'ensemble de ces acides aminés, on peut compléter utilement cet apport.

Avantageusement, la matière grasse comprend une huile polyinsaturée ou un mélange d'huiles polyinsaturées.

S'agissant à nouveau d'interpréter et de comprendre le rôle des différents éléments, on peut proposer ce qui suit, sans se limiter.

Les enzymes produits en réponse à des stimulations spécifiques sont connus comme des complexes provoqués. Mais ce processus de biosynthèse prend du temps et une fois la stimulation terminée, la cellule résorbe la protéine en faisant un complexe et elle utilise la protéine pour d'autres buts. En revanche, si le complexe provoqué a déjà été stimulé et maintenu par la présence continue de stimulation, la cellule peut répondre plus rapidement aux stimulations nutritives dans son environnement.

Par conséquent, le taux de croissance peut être augmenté de façon importante par l'exposition continue de la cellule à certaines variétés de substances nutritives, afin qu'il ne soit pas nécessaire à la cellule de changer ou de refaire souvent des enzymes nutritionnels. Comme les enzymes sont nécessaires pour casser les sources disponibles dans le compost pendant la phase végétative, il est extrêmement souhaitable que les cellules soient préparées métaboliquement pour rencontrer ces substances nutritives.

Conformément à l'invention, on utilise des huiles polyinsaturées telles que l'huile de soja. Ces huiles présentent en outre l'avantage de contenir des tocophérols porteurs de vitamine E. Ceux-ci ont pour but de minimiser le vieillissement et le mécanisme de défense de la membrane plasmique.

De préférence, l'huile polyinsaturée comprend des acides gras comportant dix à dix-huit atomes de carbone et de préférence seize ou dix-huit atomes de carbone.

Quelques enzymes permettent aux substances nutritives d'être transférées facilement à travers la membrane plasmique. La cellule est capable de produire différents enzymes dans le but spécifique d'agir chimiquement sur des types particuliers de substances nutritives avec lesquelles la cellule est entrée en contact.

Quand la cellule contacte un type particulier de substance nutritive, par exemple un lipide, la cellule va réagir en secrétant un enzyme particulier spécifiquement dirigé vers un lipide dégradé.

Un tel enzyme de lipide est appelé lipase. Les différents ingrédients du processus, dont la particule activatrice, sont les triglycérides et phospholipides. Afin d'ingérer ces deux variétés de lipides, la cellule construirait et sécréterait une lipase triglycéride et une phospholipase. Ces enzymes agiraient spécifiquement sur les lipides respectifs pour dégrader la structure du lipide, aider à ce que le lipide soit transféré à travers la membrane plasmique et rendre les lipides aptes à générer de l'énergie dans le cytoplasme. De cette manière, la cellule individuelle obtient de l'énergie de son environnement, pousse et se divise pour créer un mycélium plus gros et plus vigoureux.

Les enzymes sont de grands complexes de protéine qui sont biosynthétisés par les cellules pour accélérer les taux de réactions biochimiques. Les enzymes servent en général à catalyser des réactions qui sont nécessaires ou utiles à la cellule. La plupart des enzymes ne sont pas stockés sous la forme assimilable par la cellule mais au lieu de cela sont biosynthétisés en réponse aux incitations biochimiques spécifiques.

Ce processus de biosynthèse prend du temps, par exemple la cellule ayant la capacité de synthétiser un enzyme pour faciliter la dégradation des graisses complexes, telles que les lipases stockés par la cellule. A la place, la cellule répondra à la stimulation fournie par la présence de lipides dans une très proche proximité en biosynthétisant l'enzyme cassé. Les enzymes produits en réponse à des stimulations spécifiques sont connus comme des complexes provoqués.

Une fois la stimulation terminée, la cellule résorbe la protéine, faisant un complexe et elle utilise la protéine pour d'autres buts. En revanche, si le complexe provoqué a déjà été stimulé et maintenu par la présence continue de stimulation, la cellule peut répondre plus rapidement aux stimulations nutritives dans son environnement.

Par conséquent, le taux de croissance peut être augmenté de façon importante par l'exposition continue de la cellule à certaines variétés de substances nutritives afin qu'il ne soit pas nécessaire à la cellule de changer ou de refaire souvent les enzymes nutritionnels. Une des fonctions de la particule est d'activer la substance nutritive principale en réduisant les enzymes des cellules et de les garder activés pendant et à travers la période de croissance des cellules. Comme les enzymes seront nécessaires pour dégrader les sources disponibles dans le compost pendant la phase végétative, il est extrêmement souhaitable que les cellules soient préparées métaboliquement pour rencontrer ces substances nutritives.

Ainsi, les triglycérides polyinsaturés et les phospholipides facilement utilisables qui sont contenus dans la solution font que la cellule du champignon provoque un contact avec ces huiles polyinsaturées, ce qui amènera les lipases triglycérides et les lipases phospholipides à ingérer de telles huiles polyinsaturées.

Quand les cellules rencontrent des sources d'énergie similaires dans le compost, elles auront un niveau élevé d'enzymes nécessaire pour ingérer de telles sources énergétiques. Le temps total de la croissance de telles cellules activées sera augmenté en éliminant la nécessité pour les cellules, de produire les enzymes nécessaires après avoir rencontré la substance nutritive.

La dégradation des acides gras à longue chaîne est effectuée par le Coenzyme A en présence de l'ATP. Ce système est responsable de la synthèse des acides gras à longue chaîne qui sont des constituants constants des lipides.

Le premier intermédiaire à avoir été identifié dans la synthèse des acides gras à longue chaîne, soit en C₁₀ à C₁₈ a été le malonyl CoA. Sa synthèse est catalysée par un enzyme contenant de la biotine, l'acétyl CoA carboxylase, qui effectue une carboxylation de l'acétyl CoA en présence d'ATP.

On utilise des phospholipides qui sont obtenus à partir de licithine naturelle. La licithine de soja est la première source de phospholipide de par son contenu élevé en acide linoléique, choline et éthanolamine.

L'autre précurseur de la licithine est la choline qui est synthétisée par méthylations successives.

Ainsi les triglycérides polyinsaturés et les phospholipides facilement utilisables et qui sont contenus dans la solution font que la cellule du champignon provoque un contact avec ces huiles polyinsaturées, ce qui amènera les lipases triglycérides et les lipases phospholipides à ingérer de telles huiles polyinsaturées.

Un des premiers enzymes pour transférer de l'énergie à travers la membrane plasmique est un enzyme connu comme un adénosine trisphosphate ou ATP.

Dans les cellules du champignon, l'ATP est telle qu'elle est activée par la présence de calcium. Ainsi, la présence de calcium au bord de la membrane plasmique active cet enzyme et crée le degré optimum de transport d'énergie.

On peut aussi utiliser des tocophérols qui sont porteurs de vitamine E. Ils sont par exemple contenus dans les huiles de soja. Ils ont pour effet notamment de minimiser le vieillissement et le mécanisme de défense de la membrane plasmique.

Selon l'invention, le support peut encore comprendre d'autres constituants supplémentaires ou additifs qui peuvent être liquides ou bien solides.

Lorsqu'on introduit des additifs solides, ceux-ci peuvent être considérés comme étant en somme des additifs de complémentation. En effet, on pense, sans vouloir se limiter à cette interprétation, que ces additifs solides ont essentiellement deux rôles. D'une part, certains d'entre eux constituent un complément nutritif qui facilite encore la croissance des mycélium et le développement des carpophores. D'autre part, certains d'entre eux présentent l'intérêt de faciliter ou d'améliorer encore l'individualisation des granulés. On peut d'ailleurs noter qu'un même additif solide peut avoir les deux effets, à savoir être utile en tant que complément nutritif et aussi être utile pour faciliter ou améliorer l'individualisation des granulés. Cela étant, un additif solide peut avoir exclusivement une fonction.

La phase nutritive est surtout liquide lorsqu'elle comprend l'eau, la source de carbone, la source d'azote, les huiles et l'oxyde de calcium. On introduit encore, de préférence, dans le support, des additifs complémentaires se présentant sous forme liquide, notamment ceux choisis dans le groupe comprenant la vitamine E ou ses dérivés et les phosphoaminolipides tels que la lécithine.

Selon un procédé bien connu de l'homme de l'art, on peut ajouter aussi un ou plusieurs alcools. Ces additifs complémentaires, sous forme liquide, présentent l'intérêt de compléter l'apport nutritionnel destiné à la croissance des mycélium et au développement des carpophores.

On peut introduire aussi, avantageusement, dans le support, des additifs complémentaires se présentant sous forme solide adsorbés au support, notamment ceux choisis dans le groupe comprenant le carbonate de calcium, le sulfate de calcium, le charbon actif, une farine, en particulier la farine de sorgho et de la paille finement broyée.

Ceci dit, il faut bien comprendre que si ces additifs complémentaires perfectionnent l'individualisation des granulés, ils ne la réalisent pas à eux seuls. En effet, les granulés sont plutôt séparés, et en particulier, ils ne forment pas un agglomérat. Il s'agit donc effectivement d'un perfectionnement à l'individualisation.

Par ailleurs, les autres éléments liquides constituant des additifs complémentaires, forment, avec les constituants liquides, une phase nutritive liquide, cette phase nutritive liquide remplissant au maximum 70 % du substrat.

Le charbon actif présente l'intérêt de piéger les molécules lourdes et les substances toxiques susceptibles de gêner la croissance du mycélium ou le développement du carpophore.

Le rôle des farines de sorgho et de paille est notamment de préparer la fabrication d'enzymes extracellulaires. Il s'agit d'un groupe d'enzymes produit à l'intérieur des cellules. Ces enzymes extracellulaires constituent l'aspect fondamental de la nutrition. Les enzymes extracellulaires sont produits afin de permettre la dégradation des grosses molécules insolubles que renferme le compost jusqu'au stade de petites molécules que le mycélium peut utiliser.

Afin d'obtenir l'activité de ces enzymes extracellulaires, le mycélium est mis en présence de farine de sorgho et farine de paille. Un apport supplémentaire de calcium carbonate ou de sulfate carbonate présente un effet tampon et est utile pour la régulation du pH, le calcium sulfate ou carbonate ayant un double rôle de rectification du pH et d'apport de calcium.

Il est avantageux que le taux d'absorption de la phase nutritive ne dépasse pas une valeur limite de l'ordre de 70 %. Le reste est de l'air qui aussi est nécessaire au développement du mycélium. En effet, au-delà, le substrat devient moins efficace et donne lieu à un faible rendement.

L'utilisation de la perlite, matériau poreux, présente de multiples avantages : il s'agit d'un matériau chimiquement inerte, de bonne résistance mécanique, de faible densité et poreux. Ainsi, les particules de perlite peuvent absorber la solution nutritive et être pénétrées par le mycélium lors de sa croissance.

Le support obtenu conformément à l'invention est aisément reproductible, les constituants étant très industrialisés, de qualité constante et bon marché. La phase nutritive apporte aux cellules tous les éléments dont elles ont besoin pendant toute la phase de croissance. En effet, ce support contient des éléments similaires à ceux que les cellules rencontreront dans le compost, favorisant ainsi successivement la croissance mycélienne et le développement des carpophores.

Ainsi, le support conforme à l'invention peut être utilisé à deux stades de la croissance du champignon, à savoir dès le début pour la croissance mycélienne et également, lors du développement du carpophore. Cela étant, la composition de la solution nutritive est avantageusement ajustée pour l'un et pour l'autre des stades de la croissance.

Selon une première variante, le support est destiné à la croissance du mycélium et le rapport de la phase nutritive liquide au substrat est de l'ordre de 300 ml pour environ 100 g.

Avantageusement, pour environ 100 ml de phase nutritive liquide :
(1) l'eau est présente en une quantité comprise entre 65 et 85 g, et de préférence comprise entre 70 et 80 g,
(2) la source de carbone est présente en une quantité comprise entre 10 et 20 g, et de préférence entre 12 et 18 g,
(3) la source d'azote est présente en une quantité comprise entre 1 et 7 g, et de préférence entre 2 et 6 g,
(4) les matières grasses sont présentes en une quantité comprise entre 1 et 5 g, et de préférence entre 2 et 4 g,
(5) l'oxyde de calcium est présent en une quantité voisine de 400 mg.

Selon une deuxième variante, le support est destiné au développement du carpophore. Pour environ 100 ml de phase nutritive liquide :
(1) l'eau est présente en une quantité comprise entre 65 et 85 g, et de préférence comprise entre 70 et 80 g,
(2) la source de carbone est présente en une quantité comprise entre 8 et 14 g, et de préférence entre 10 et 12 g,
(3) la source d'azote est présente en une quantité comprise entre 0,7 et 5 g, et de préférence entre 2 et 3 g,
(4) les matières grasses sont présentes en une quantité comprise entre 0,7 et 3,5 g, et de préférence entre 1,5 et 2,5 g,
(5) l'oxyde de calcium est présent en une quantité pouvant aller jusqu'à 400 mg.

Par exemple, le support peut être mis en oeuvre comme agent activateur en étant introduit dans le gobetage. Il favorise en somme le développement des carpophores.

Lorsque le mycélium arrive à un taux de développement suffisamment avancé, il a besoin, pour continuer sa croissance, de se trouver en présence de terre. Cette terre est couramment appelée "terre de gobetage" par les champignonistes.

De manière plus précise, on peut rappeler que l'on peut utiliser, pour favoriser le développement des carpophores, du compost envahi de blanc mélangé avec la terre de gobetage. En effet, on a observé qu'en procédant ainsi, la croissance du champignon est plus rapide.

Le support selon l'invention peut être disposé par exemple avec la terre de gobetage, dans la deuxième phase de croissance du champignon, afin de faciliter le développement du carpophore. Ce support s'appelle parfois CAC'ING. Le mot CAC'ING est formé par les initiales des mots anglais suivants : Compost Added at Casing. Le CAC'ING est le mélange de compost incubé à la terre de gobetage pendant ou après le gobetage. Quand cela a lieu en même temps que le gobetage, beaucoup de producteurs n'interviennent plus ensuite sur la terre de gobetage. Par contre, cela doit être fait si le CAC'ING a lieu après le gobetage.

On s'accorde en général pour lui reconnaître certains avantages. En particulier, on note un racourcissement de la période comprise entre le gobetage et la ventilation, une précocité des volées. On note aussi une fructification plus régulière, pas de formation groupée, d'où une meilleure qualité de champignons et une productivité de cueille plus élevé. Le gain de temps peut être utilisé pour une volée supplémentaire ou pour un cycle de culture plus court. Par ailleurs, la première volée peut être répartie sur un nombre de jours plus élevé. Cela permet de récolter cette volée en un à deux jours de plus.

Dans le CAC'ING, la croissance est stimulée par le CO₂ et par la chaleur provenant du compost sous-jacent, sans aucun lien avec les caractéristiques de l'air au-dessus des couches. Chaque point forme en se développant une matrice de mycélium et la colonisation de la terre de gobetage est rapide. La période disponible pour l'arrosage pendant l'envahissement de la terre par le blanc est considérablement réduite, tout l'arrosage étant appliqué le troisième, quatrième et cinquième jour après le gobetage. Le substrat doit donc permettre la croissance sans être gêné par la haute teneur en humidité nécessaire à la terre de gobetage à cette période.

Avantageusement, pour environ 1 litre de substrat, le carbonate de calcium est présent en une quantité comprise entre 4 et 10 g, le sulfate de calcium en une quantité comprise entre 2 et 8 g, la farine de sorgho en une quantité comprise entre 100 et 150 g et le charbon actif en une quantité pouvant aller jusqu'à environ 5 g.

Si on utilise de la perlite, celle-ci a fait l'objet d'un traitement thermique à environ 1500°C pour être expansée.

La perlite est un matériau chimiquement inerte, poreux et doté d'un grand pouvoir d'absorption. Il peut ainsi absorber avec une bonne oxygénation les éléments nutritifs de phase nutritive et les restituer au fur et à mesure des besoins suivant le stade d'évolution du mycélium.

De préférence, pour 1 litre de substrat, la farine de paille est présente en une quantité pouvant aller jusqu'à environ 200 g.

Plus préférentiellement, la phase nutritive présente en pH voisin de 7,5.

Ce pH est ajusté aux moyens notamment des sels de calcium et d'un tampon.

Le procédé de préparation d'un support conforme à l'invention comprend :
. une première étape de préparation de la phase nutritive en réalisant une émulsion comprenant l'eau, la source de carbone, la source d'azote, la matière grasse et l'oxyde de calcium,
. une deuxième étape de mise en contact de la phase nutritive liquide avec le substrat inerte et poreux, de sorte que la phase nutritive liquide soit essentiellement absorbée par le substrat afin de remplir de préférence jusqu'à 70 % du volume du substrat,
. une troisième étape de mise en contact du substrat ayant essentiellement absorbé la phase nutritive liquide avec des particules solides choisies dans le groupe comprenant notamment la farine de sorgho, la paille finement hâchée, le sulfate de calcium et le carbonate de calcium, de sorte que le substrat adsorbe au moins partiellement ces particules solides,
. une quatrième étape de stérilisation du substrat ayant adsorbé au moins partiellement les particules solides pour obtenir un support prêt à recevoir une inoculation de mycélium liquide.

Les farines mises en oeuvre présentent une granulométrie moyenne voisine de 0,5 mm. La paille finement hâchée présente, quant à elle, une granulométrie comprise entre 1 et 2 mm. En général, cette paille est obtenue après une opération de compression à environ 2 kg suivie d'une opération d'extrusion à environ 180°C puis d'une opération d'expansion réalisée dans un moulin.

L'oxyde de calcium a pour effet de faire démarrer le procédé enzymatique mettant en oeuvre l'ATP.

En général, l'oxyde de calcium peut être mis en oeuvre environ à raison de 1,5 g par litre de perlite. De cette façon, on réussit à reconstituer l'ensemble des matières nutritives nécessaires à la nutrition de mycélium.

Les particules solides, notamment la farine, sont ajoutées lors de la troisième étape du procédé selon l'invention. En ce sens, dans la mesure où il s'agit de l'avant dernier stade du procédé, elles apparaissent aussi comme étant destinées, pour ainsi dire, à une opération d'enrobage au moins partielle, propre notamment à séparer les granulés de substrat.

La stérilisation peut être obtenue de différentes façons. En tout état de cause, la durée du traitement thermique nécessaire à la stérilisation d'un substrat tel que la perlite est bien plus courte que celle qui était nécessaire dans le cas de la stérilisation de grains de céréales.

On note, à cet égard encore, un intérêt du support selon la présente invention.

Par suite, les risques de dégradation des différents éléments nutritifs sont donc limités.

En pratique, la phase nutritive liquide peut être traitée sur un échangeur à plaques ou à surface râclée. Ce type de stérilisation permet de préserver davantage l'intégrité des différents éléments nutritifs. La perlite pourrait être stérilisée de son côté de manière classique, tout comme la phase nutritive.

Avantageusement, lors de la préparation de la phase nutritive, on ajoute le carbonate de calcium et le sulfate de calcium pour assurer au support un pH voisin de 7,5.

En pratique, on utilise un réacteur qui se présente sous une forme tubulaire dans lequel se déplace une vis à ruban hélicoïdal. L'humidité du support est ajustée au moment de la mise en poche au moyen d'un apport d'eau stérile.

Plus avantageusement, on utilise un réacteur muni :
. de premiers moyens d'alimentation de la perlite à l'entrée du réacteur,
. de seconds moyens d'alimentation de l'émulsion en aval des premiers moyens,
. de troisièmes moyens d'alimentation des particules solides en aval des seconds moyens.

Avant d'être stérilisé, le support peut être disposé dans une colonne verticale. Dans ce cas, il est séché au moyen de deux courants d'air de direction opposée. Il est ensuite stocké dans un réacteur puis disposé sous vide. En final, on envoie l'ensemble dans une salle de stérilisation, en mettant en jeu, le cas échéant, de l'oxyde d'éthylène selon un procédé bien connu de l'homme de l'art. Il est bon, lorsqu'on utilise un réacteur tubulaire, de faire en sorte que les farines arrivent au contact du substrat environ au milieu de la vis. De plus, on fait en sorte que les farines arrivent rapidement. Ces précautions sont en effet nécessaires, compte-tenu du caractère fragile et surtout friable de la perlite. En pratique, la longueur utile de la vis est d'environ cinquante centimètres.

L'invention pourra être mieux comprise à l'aide des exemples non limitatifs qui suivent et qui constituent des modes de réalisation préférentiels du support selon l'invention.

### Exemple 1 :

On réalise un support conforme à l'invention comprenant un substrat constitué par de la perlite expansée et une phase nutritive. Ce support est destiné à être utilisé pour favoriser la croissance du mycélium.

La composition de la phase nutritive est indiquée dans le tableau I ci-après :

**Tableau I**

| | |
|---|---|
| Acide glutamique | 4 g |
| Oxyde de calcium | 2,4 g |
| Protéine isolée de soja | 36 g |
| Huile de soja raffinée | 10 g |
| Lécithine | 0,5 g |
| Dextrine | 104 g |
| Eau | 500 ml |

On remarquera que la source d'azote est constituée ici par un acide aminé : l'acide glutamique et les protéines isolées de soja. On remarquera aussi que la source de carbone est constituée par la dextrine. Quant à l'huile utilisée, il s'agit de l'huile de soja raffinée.

On met en contact 600 ml de phase nutritive pour 2 litres de perlite expansée. On utilise enfin :
- 260 g: de farine de sorgho,
- 10 g: de carbonate de calcium,
- 4 g: de sulfate de calcium et
- 60 g: de paille finement broyée.

### Exemple 2 :

On réalise un autre support conforme à l'invention constitué par de la perlite expansée et une phase nutritive. Comme pour l'exemple 1, ce support est destiné à favoriser la croissance du mycélium.

La composition de la phase nutritive est indiquée dans le tableau II ci-après :

**Tableau II**

| | |
|---|---|
| Acide glutamique | 1,25 g |
| Oxyde de calcium | 0,75 g |
| Protéine isolée de soja hydrolysée | 10 g |
| Huile de soja | 10 g |
| Lécithine | 0,5 g |
| Dextrine | 130 g |
| Eau | 500 g |

Par conséquent, la source d'azote est constituée ici par un ensemble de protéine isolée de soja hydrolysée et de l'acide glutamique ; la source de carbone est de la dextrine ; l'huile mise en oeuvre est l'huile de soja.

On met en oeuvre 650 ml de phase nutritive pour 2 litres de perlite. On adsorbe au moins partiellement en final l'ensemble obtenu au moyen de 200 g de farine de sorgho et 60 g de paille finement broyée, pour 2 l de perlite.

### Exemple 3 :

On réalise un autre support conforme à l'invention. Là encore, le support est destiné à être utilisé pour la croissance du mycélium. La composition de la phase nutritive est rassemblée dans le tableau III ci-après :

**Tableau III**

| | |
|---|---|
| Eau | 260 ml |
| Dextrine | 42 g |
| Oxyde de calcium | 1 g |
| Alanine | 0,52 g |
| Arginine | 0,81 g |
| Acide aspartique | 1,23 g |
| Acide glutamique | 4,22 g |
| Glycine | 0,46 g |
| Histidine | 0,35 g |
| Isolucine | 0,57 g |
| Leucine | 0,96 g |
| Lysine | 0,72 g |
| Proline | 1,20 g |
| Sérine | 0,61 g |
| Thréonine | 0,43 g |
| Tryptophane | 0,14 g |
| Tyrosine | 0,44 g |
| Valine | 0,58 g |
| Huile polyinsaturée | 13 g |
| Lécithine | 0,32 g |

Par conséquent, la source d'azote est constituée ici par les acides aminés suivants : l'alanine, l'arginine, l'acide aspartique, l'acide glutamique, la glycine, l'histidine, l'isolucine, la leucine, la lysine, la proline, la sérine, la thréonine, la tryptophane, la tyrosine, la valine.

Par ailleurs, la source de carbone est constituée par de la dextrine.

Cette phase nutritive est mélangée à 1 litre de perlite.

### Exemple 4 :

On réalise encore un autre support conforme à l'invention, destiné à être utilisé pour favoriser la croissance du mycélium.

La composition de la phase nutritive est indiquée dans le tableau IV ci-après :

**Tableau IV**

| | |
|---|---|
| Dextrine | 60 g |
| Farine de soja | 12 g |
| Protéine de pomme de terre | 12 g |
| Tartrate d'ammonium | 3 g |
| Oxyde de calcium | 3 g |
| Acide glutamique | 7,5 g |
| Proline | 3 g |
| Lécithine | 4 g |
| Huile de coton | 20 g |
| Charbon actif | 1,5 g |
| Eau | 300 g |

Les particules solides ajoutées proviennent de :

| | |
|---|---|
| Farine de sorgho | 100 g |
| Sulfate de calcium | 3 g |
| Carbonate de calcium | 6 g |
| et de la paille finement broyée | 25 g |

En l'occurrence, la source d'azote est constituée essentiellement par des protéines de pomme de terre.

Cependant, dans la mesure où les pommes de terre n'apportent pas la totalité des protéines nécessaires à la croissance du mycélium, on a ajouté volontairement celles qui manquent. Ces protéines manquantes sont l'acide glutamique, la proline et la lécithine.

Par ailleurs, la source de carbone est à nouveau de la dextrine.

Cette phase nutritive est mise en contact avec 1 litre de perlite.

Après la stérilisation, une mise en poche et un lardage de mycélium liquide sont effectués pour subir une incubation afin que le mycélium gagne la totalité du support.

### Exemple 5 :

On réalise un support conforme à l'invention, destiné cette fois à être utilisé comme agent activateur du développement du carpophore.

La phase nutritive présente une composition indiquée dans le tableau V ci-après :

**Tableau V**

| | |
|---|---|
| Eau | 600 g |
| Dextrine | 104 g |
| Acide glutamique | 4 g |
| Protéine isolée de soja hydrolysée | 20 g |
| Oxyde de calcium | 2,5 g |
| Huile de soja | 10 g |
| Charbon actif | 3 g |

En l'occurrence, la source d'azote est constituée par des protéines de soja hydrolysées et de l'acide glutamique. Par ailleurs, la source de carbone est à nouveau de la dextrine.

Cette solution nutritive est mise au contact de 220 g de perlite. Enfin, l'enrobage au moins partiel est réalisé au moyen de
. 200 g de farine de sorgho,
. 6 g de sulfate de calcium,
. 12 g de carbonate de calcium, et éventuellement
. d'autres farines, notamment de paille.

Ensuite, le substrat est stérilisé dans un réacteur, puis inoculé de mycélium liquide et mis en poche pour envahissement.

En définitive, le support selon l'invention présente les avantages résultant de l'utilisation d'un matériau inerte et poreux, tel que la perlite et d'une solution nutritive de composition déterminée.

De plus, cette association est réalisée par un procédé en continu, innovant, entièrement contrôlé.

Il en résulte un support qui, associé à un inoculum mycélien, fournit un produit d'ensemencement du compost de culture efficace, productif et économique.

En outre, le support selon l'invention comprend une phase nutritive dont la composition est parfaitement maîtrisée et définie. De ce fait, le support selon l'invention est reproductible et propre à apporter l'ensemble des éléments nutritifs nécessaires à la croissance du mycélium et au développement des carpophores.

## Revendications

1. Support pour la culture des champignons, propre à favoriser la croissance de mycélium et le développement des carpophores, contenant :
i) un substrat inerte et poreux se présentant sous forme de granulés, tel que de la perlite expansée,
ii) une phase nutritive apportant notamment les éléments chimiques indispensables à la croissance mycélienne et au développement des carpophores,
caractérisé par le fait que ledit substrat possède les propriétés suivantes :
(1) il se présente sous un état pratiquement anhydre,
(2) il présente une densité inférieure à environ 0,2 et de préférence voisine de 0,1,
(3) il présente une granulométrie comprise entre 2 et 5 mm, et de préférence comprise entre 3 et 4 mm,
(4) il comporte une proportion relative de vides comprise entre 60 et 90 % en volume.

2. Support selon la revendication 1, caractérisé par le fait que le substrat inerte et poreux présente une proportion relative de vides voisine de 70 % en volume.

3. Support selon l'une quelconque des revendications précédentes, caractérisé par le fait que le substrat inerte et poreux présente un pourcentage d'humidité résiduelle inférieur à environ 5 % en poids.

4. Support selon l'une quelconque des revendications précédentes, caractérisé par le fait que la phase nutritive comprend, à titre de constituants liquides principaux absorbés par le substrat :
(1) de l'eau, dans une proportion relative en poids comprise entre 70 et 90 %,
(2) une source de carbone, dans une proportion relative en poids comprise entre 5 et 20 %,
(3) une source d'azote, dans une proportion relative en poids comprise entre 1 et 10 %,
(4) de la matière grasse, dans une proportion relative en poids comprise entre 1 et 5 %, et
(5) de l'oxyde de calcium, dans une proportion relative en poids pouvant aller jusqu'à environ 1 %.

5. Support selon la revendication 4, caractérisé par le fait que la source de carbone est un hydrate de carbone, de préférence un hydrate de carbone provenant de la dégradation de l'amidon.

6. Support selon la revendication 5, caractérisé par le fait qu'il s'agit d'une dextrine de formule générique (C₆ H₁₀ 0₅)ₙ H₂0, n étant un entier.

7. Support selon l'une quelconque des revendications 4 à 6, caractérisé par le fait que la source d'azote contient au moins un acide aminé provenant de préférence d'un hydrolysat de protéines végétales, notamment d'un hydrolysat de protéines de soja.

8. Support selon l'une quelconque des revendications 4 à 7, caractérisé par le fait que la matière grasse comprend une huile polyinsaturée ou un mélange d'huiles polyinsaturées.

9. Support selon la revendication 8, caractérisé par le fait que l'huile polyinsaturée comprend des acides gras comportant dix à dix-huit atomes de carbone et de préférence seize ou dix-huit atomes de carbone.

10. Support selon l'une quelconque des revendications 4 à 9, caractérisé par le fait que le support comprend d'autres constituants liquides formant des additifs complémentaires se présentant sous forme liquide, notamment ceux choisis dans le groupe comprenant la vitamine E ou ses dérivés et les phosphoaminolipides tels que la lécithine, ces autres constituants liquides constituant des additifs complémentaires formant, avec les constituants liquides principaux, une phase nutritive liquide, cette phase nutritive liquide remplissant de préférence environ 70 % du substrat.

11. Support selon l'une quelconque des revendications précédentes, caractérisé par le fait qu'il comprend des additifs complémentaires se présentant sous forme solide adsorbés au substrat, notamment ceux choisis dans le groupe comprenant le carbonate de calcium, le sulfate de calcium, le charbon actif, une farine, en particulier la farine de sorgho et de la paille finement broyée.

12. Support selon l'une quelconque des revendications précédentes, destiné à la croissance de mycélium, caractérisé par le fait que le rapport de la phase nutritive liquide au substrat est de l'ordre de 300 ml pour environ 100 g.

13. Support selon la revendication 12, caractérisé par le fait que, pour environ 100 ml de phase liquide nutritive,
(1) l'eau est présente en une quantité comprise entre 65 et 85 g, et de préférence comprise entre 70 et 80 g,
(2) la source de carbone est présente en une quantité comprise entre 10 et 20 g, et de préférence entre 12 et 18 g,
(3) la source d'azote est présente en une quantité comprise entre 1 et 7 g, et de préférence entre 2 et 6 g,
(4) les matières grasses sont présentes en une quantité comprise entre 1 et 5 g, et de préférence entre 2 et 4 g,
(5) l'oxyde de calcium est présent en une quantité voisine de 400 mg.

14. Support selon l'une quelconque des revendications précédentes, destiné au développement du carpophore, caractérisé par le fait que, pour environ 100 ml de phase liquide nutritive :
(1) l'eau est présente en une quantité comprise entre 65 et 85 g, et de préférence comprise entre 70 et 80 g,
(2) la source de carbone est présente en une quantité comprise entre 8 et 14 g, et de préférence entre 10 et 12 g,
(3) la source d'azote est présente en une quantité comprise entre 0,7 et 5 g, et de préférence entre 2 et 3 g,
(4) les matières grasses sont présentes en une quantité comprise entre 0,7 et 3,5 g, et de préférence entre 1,5 et 2,5 g,
(5) l'oxyde de calcium est présent en une quantité pouvant aller jusqu'à 400 mg.

15. Support selon la revendication 14, caractérisé par le fait que, pour environ 1 litre de substrat, le carbonate de calcium est présent en une quantité comprise entre 4 et 10 g, le sulfate de calcium en une quantité comprise entre 2 et 8 g, la farine de sorgho en une quantité comprise entre 100 et 150 g et le charbon actif en une quantité pouvant aller jusqu'à environ 5 g.

16. Support selon la revendication 14, caractérisé par le fait que pour 1 litre de substrat, la farine de paille est présente en une quantité pouvant aller jusqu'à environ 200 g.

17. Support selon l'une quelconque des revendications précédentes, caractérisé par le fait que la phase nutritive présente un pH voisin de 7,5.

18. Procédé de préparation d'un support selon l'une quelconque des revendications précédentes, caractérisé par le fait que :
. dans une première étape, on prépare la phase nutritive liquide en réalisant une émulsion comprenant l'eau, la source de carbone, la source d'azote, la matière grasse et l'oxyde de calcium,
. dans une deuxième étape, on met en contact la phase nutritive liquide avec le substrat inerte et poreux, de sorte que la phase nutritive liquide soit essentiellement absorbée par le substrat, la phase nutritive liquide remplissant de préférence jusqu'à 70 % du volume du substrat,
. dans une troisième étape, on met en contact le substrat ayant essentiellement absorbé la phase nutritive liquide avec des particules solides choisies dans le groupe comprenant notamment la farine de sorgho, la paille finement hâchée, le sulfate de calcium et le carbonate de calcium, de sorte que le substrat adsorbe au moins partiellement ces particules solides,
. dans une quatrième étape, on stérilise le substrat ayant adsorbé au moins partiellement les particules solides pour obtenir un support prêt à recevoir une inoculation de mycélium liquide.

19. Procédé selon la revendication 18, caractérisé par le fait qu'on ajoute le carbonate de calcium et le sulfate de calcium pour assurer au support un pH voisin de 7,5.

20. Procédé selon l'une quelconque des revendications 18 ou 19, caractérisé par le fait que l'on utilise un réacteur tubulaire équipé d'une vis à ruban hélicoïdal, muni :
. de premiers moyens d'alimentation de la perlite à l'entrée dudit réacteur,
. de seconds moyens d'alimentation de l'émulsion en aval des premiers moyens,
. de troisièmes moyens d'alimentation des particules solides en aval des seconds moyens.

## Claims

1. Support for the culture of mushrooms, capable of promoting the growth of mycelium and the development of the carpophores, containing:
i) an inert and porous substrate provided in the form of granules, such as expanded perlite,
ii) a nutrient phase providing especially the chemical elements essential for the mycelial growth and for the development of the carpophores,
characterized in that the said substrate has the following properties:
(1) it is provided in a practically anhydrous state,
(2) it has a density of less than approximately 0.2 and preferably of close to 0.1,
(3) it has a particle size of between 2 and 5 mm, and preferably of between 3 and 4 mm,
(4) it has a relative proportion of empty spaces of between 60 and 90% by volume.

2. Support according to Claim 1, characterized in that the inert and porous substrate has a relative proportion of empty spaces close to 70% by volume.

3. Support according to any one of the preceding claims, characterized in that the inert and porous substrate has a percentage of residual moisture of less than approximately 5% by weight.

4. Support according to any one of the preceding claims, chatacterized in that the nutrient phase comprises, by way of main liquid constituents absorbed by the substrate:
(1) water, in a relative proportion by weight of between 70 and 90 %,
(2) a carbon source, in a relative proportion by weight of between 5 and 20 %,
(3) a nitrogen source, in a relative proportion by weight of between 1 and 10 %,
(4) fat, in a relative proportion by weight of between 1 and 5 %, and
(5) calcium oxide, in a relative proportion by weight which may be as high as approximately 1%.

5. Support according to Claim 4, characterized in that the carbon source is a carbohydrate, preferably a carbohydrate obtained from the degradation of starch.

6. Support according to Claim 5, characterized in that it is a dextrin of generic formula (C₆H₁₀O₅)ₙ H₂O, n being an integer.

7. Support according to any one of Claims 4 to 6, characterized in that the nitrogen source contains at least one amino acid preferably obtained from a hydrolysate of plant proteins, especially a hydrolysate of soya bean proteins.

8. Support according to any one of Claims 4 to 7, characterized in that the fat comprises a polyunsaturated oil or a mixture of polyunsaturated oils.

9. Support according to Claim 8, characterized in that the polyunsaturated oil comprises fatty acids containing ten to eighteen carbon atoms and preferably sixteen to eighteen carbon atoms.

10. Support according to any one of Claims 4 to 9, characterized in that the support comprises other lipid constituents forming additional additives provided in liquid form, in particular those chosen from the group comprising vitamin E or its derivatives and phosphoamino lipids such as lecithin and, these other liquid constituents constituting additional additives forming, with the main liquid constituents, a liquid nutrient phase, this liquid nutrient phase preferably filling approximately 70% of the substrate.

11. Support according to any one of the preceding claims, characterized in that it comprises additional additives provided in solid form adsorbed onto the substrate, in particular those chosen from the group comprising calcium carbonate, calcium sulphate, activated charcoal, meal, in particular sorghum meal and finely ground straw.

12. Support according to any one of the preceding claims, intended for the growth of mycelium, characterized in that the ratio of the liquid nutrient phase to the substrate is of the order of 300 ml for approximately 100 g.

13. Support according to Claim 12, characterized in that, for approximately 100 ml of liquid nutrient phase,
(1) water is present in a quantity of between 65 and 85 g, and preferably of between 70 and 80 g,
(2) the carbon source is present in a quantity of between 10 and 20 g, and preferably of between 12 and 18 g,
(3) the nitrogen source is present in a quantity of between 1 and 7 g, and preferably of between 2 and 6 g,
(4) the fat is present in a quantity of between 1 and 5 g, and preferably of between 2 and 4 g,
(5) the calcium oxide is present in a quantity of close to 400 mg.

14. Support according to any one of the preceding claims, intended for the development of the carpophore, characterized in that, for approximately 100 ml of liquid nutrient phase,
(1) the water is present in a quantity of between 65 and 85 g, and preferably of between 70 and 80 g,
(2) the carbon source is present in a quantity of between 8 and 14 g, and preferably of between 10 and 12 g,
(3) the nitrogen source is present in a quantity of between 0.7 and 5 g, and preferably of between 2 and 3 g,
(4) the fat is present in a quantity of between 0.7 and 3.5 g, and preferably of between 1.5 and 2.5 g,
(5) calcium oxide is present in a quantity which may be as high as 400 mg.

15. Support according to Claim 14, characterized in that, for approximately 1 litre of substrate, calcium carbonate is present in a quantity of between 4 and 10 g, the calcium sulphate in a quantity of between 2 and 8 g, the sorghum meal in a quantity of between 100 and 150 g and the activated charcoal in a quantity which may be as high as approximately 5 g.

16. Support according to Claim 14, characterized in that for 1 litre of substrate, the straw meal is present in a quantity which may be as high as approximately 200 g.

17. Support according to any one of the preceding claims, characterized in that the nutrient phase has a pH close to 7.5.

18. Process for the preparation of a support according to any one of the preceding claims, characterized in that:
• in a first stage, the liquid nutrient phase is prepared by producing an emulsion comprising the water, the carbon source, the nitrogen source, the fat and the calcium oxide,
• in a second stage, the liquid nutrient phase is brought into contact with the inert and porous substrate, such that the liquid nutrient phase is essentially absorbed by the substrate, the liquid nutrient phase preferably filling up to 70% of the volume of the substrate,
• in a third stage, the substrate having essentially absorbed the liquid nutrient phase is brought into contact with solid particles chosen from the group comprising especially sorghum meal, finely chopped straw, calcium sulphate and calcium carbonate, such that the substrate at least partially adsorbs these solid particles,
• in a fourth stage, the substrate having at least partially adsorbed the solid particles is sterilized in order to obtain a support ready to be seeded with liquid mycelium.

19. Process according to Claim 18, characterized in that the calcium carbonate and calcium sulphate are added in order to ensure that the support has a pH close to 7.5.

20. Process according to either of Claims 18 and 19, characterized in that a tubular reactor is used equipped with a screw with a helical strip provided with:
• first means of supplying the perlite at the inlet of the said reactor,
• second means of supplying the emulsion downstream of the first means,
• third means of supplying the solid particles downstream of the second means.

## Patentansprüche

1. Unterlage für die Pilzzucht, die geeignet ist, das Pilzmyzelwachstum und die Fruchtkörperentwicklung zu fördern, enthaltend:
i) ein inertes und poröses Substrat, das in granulierter Form vorkommt, wie expandierter Perlit,
ii) eine nutritive Phase, die insbesondere die für das Pilzmyzel und die Fruchtkörperentwicklung unentbehrlichen chemischen Elemente beibringt,
gekennzeichnet durch die Tatsache, daß das Substrat die folgenden Eigenschaften aufweist:
(1) es kommt in praktisch wasserfreiem Zustand vor,
(2) es zeigt eine Dichte von kleiner als etwa 0,2 und bevorzugterweise von etwa 0,1,
(3) es zeigt eine Korngrößenverteilung, die zwischen 2 und 5 mm enthalten ist, und bevorzugt zwischen 3 und 4 mm enthalten ist,
(4) es umfaßt einen relativen Lückengrad, der zwischen 60 und 90 Vol.-% enthalten ist.

2. Unterlage nach Anspruch 1, gekennzeichnet durch die Tatsache, daß das inerte und poröse Substrat einen relativen Lückengrad nahe 70 Vol.-% aufweist.

3. Unterlage nach einem der vorangehenden Ansprüche, gekennzeichnt durch die Tatsache, daß das poröse und inerte Substrat einen Restfeuchteprozentsatz von weniger als etwa 5 Gew.-% zeigt.

4. Unterlage nach einem der vorangehenden Ansprüche, gekennzeichnet durch die Tatsache, daß die nutritive Phase, als flüssige Hauptbestandteile, die durch das Substrat absorbiert sind, umfaßt:
(1) Wasser, zu einem relativen Gewichtsanteil, der zwischen 70 und 90% enthalten ist,
(2) eine Kohlenstoffquelle, zu einem relativen Gewichtsanteil, der zwischen 5 und 20% enthalten ist,
(3) eine Stickstoffquelle, zu einem relativen Gewichtsanteil, der zwischen 1 und 10% enthalten ist,
(4) Fette, zu einem relativen Gewichtsanteil, der zwischen 1 und 5% enthalten ist, und
(5) Calciumoxid, zu einem relativen Gewichtsanteil, der bis zu etwa 1% gehen kann.

5. Unterlage nach Anspruch 4, gekennzeichnet durch die Tatsache, daß die Kohlenstoffquelle ein Kohlenhydrat ist, bevorzugt ein Kohlenhydrat, das aus dem Abbau von der Stärke stammt.

6. Unterlage nach Anspruch 5, gekennzeichnet durch die Tatsache, daß es sich um ein Dextrin der Gattungsformel (C₆H₁₀O₅)ₙ H₂O handelt, wobei n eine ganze Zahl ist.

7. Unterlage nach einem der Ansprüche 4 bis 6, gekennzeichnet durch die Tatsache, daß die Stickstoffquelle wenigstens eine Aminosäure enthält, die bevorzugt von einem Hydrolysat von Pflanzenproteinen stammt, insbesondere einem Hydrolysat von Soyaproteinen.

8. Unterlage nach einem der Ansprüche 4 bis 7, gekennzeichnet durch die Tatsache, daß das Fett ein mehrfach ungesättigtes Öl oder eine Mischung aus mehrfach ungesättigten Ölen umfaßt.

9. Unterlage nach Anspruch 8, gekennzeichnet durch die Tatsache, daß das mehrfach ungesättigte Öl Fettsäuren umfaßt, die 10 bis 18 Kohlenstoffatome aufweisen und bevorzugt 16 oder 18 Kohlenstoffatome.

10. Unterlage nach einem der Ansprüche 4 bis 9, gekennzeichnet durch die Tatsache, daß die Unterlage andere flüssige Bestandteile umfaßt, die komplementäre Zusätze in flüssiger Form bilden, insbesondere diejenigen, die ausgewählt sind aus der Gruppe, die Vitamin E oder seine Derivate und die Phosphoaminolipide wie das Lecithin umfassen, wobei diese anderen flüssigen Bestandteile komplementäre Zusätze bilden, die, zusammen mit den flüssigen Hauptbestandteilen, eine flüssige nutritive Phase bilden, wobei diese flüssige nutritive Phase bevorzugt etwa 70% des Substrats ausfüllt.

11. Unterlage nach einem der vorangehenden Ansprüche, gekennzeichnet durch die Tatsache, daß sie komplementäre Zusätze umfaßt, die in fester Form an das Substrat adsorbiert vorkommen, insbesondere jene, die aus der Gruppe ausgewählt sind, die Calciumcarbonat, Calciumsulfat, Aktivkohle, ein Mehl, insbesondere Mehl von Sorghum und von feingemahlenem Stroh, umfaßt.

12. Unterlage nach einem der vorangehenden Ansprüche, bestimmt für das Pilzmyzelwachstum, gekennzeichnet durch die Tatsache, daß das Verhältnis der flüssigen nutritiven Phase zum Substrat in der Größenordnung von 300 ml für etwa 100 g ist.

13. Unterlage nach Anspruch 12, gekennzeichnet durch die Tatsache, daß für etwa 100 ml flüssiger nutritiver Phase
(1) das Wasser in einer Menge vorhanden ist, die zwischen 65 und 85 g enthalten ist, und bevorzugt zwischen 70 und 80 g enthalten ist,
(2) die Kohlenstoffquelle in einer Menge vorhanden ist, die zwischen 10 und 20 g, und bevorzugt zwischen 12 und 18 g enthalten ist,
(3) die Stickstoffquelle in einer Menge vorhanden ist, die zwischen 1 und 7 g, und bevorzugt zwischen 2 und 6 g enthalten ist,
(4) die Fette vorhanden sind in einer Menge, die zwischen 1 und 5 g, und bevorzugt zwischen 2 und 4 g enthalten ist,
(5) das Calciumoxid vorhanden ist in einer Menge nahe 400 mg.

14. Unterlage nach einem der vorangehenden Ansprüche, bestimmt zur Fruchtkörperentwicklung, gekennzeichnet durch die Tatsache, daß für etwa 100 ml der flüssigen nutritiven Phase:
(1) das Wasser in einer Menge vorhanden ist, die zwischen 65 und 85 g enthalten ist, und bevorzugt zwischen 70 und 80 g enthalten ist,
(2) die Kohlenstoffquelle in einer Menge vorhanden ist, die zwischen 8 und 14 g, und bevorzugt zwischen 10 und 12 g enthalten ist,
(3) die Stickstoffquelle in einer Menge vorhanden ist, die zwischen 0,7 und 5 g, und bevorzugt zwischen 2 und 3 g enthalten ist,
(4) die Fette in einer Menge vorhanden sind, die zwischen 0,7 und 3,5 g, und bevorzugt zwischen 1,5 und 2,5 g enthalten ist,
(5) Calciumoxid in einer Menge vorhanden ist, die bis 400 mg reichen kann.

15. Unterlage nach Anspruch 14, gekennzeichnet durch die Tatsache, daß für etwa 1 l Substrat das Calciumcarbonat vorhanden ist in einer Menge, die zwischen 4 und 10 g enthalten ist, das Calciumsulfat in einer Menge, die enthalten ist zwischen 2 und 8 g, das Sorghum-Mehl in einer Menge, die enthalten ist zwischen 100 und 150 g, und die Aktivkohle in einer Menge, die bis etwa 5 g reichen kann.

16. Unterlage nach Anspruch 14, gekennzeichnet durch die Tatsache, daß für 1 l Substrat das Strohmehl vorhanden ist in einer Menge, die bis etwa 200 g reichen kann.

17. Unterlage nach einem der vorangehenden Ansprüche, gekennzeichnet durch die Tatsache, daß die nutritive Phase einen pH nahe 7,5 aufweist.

18. Verfahren zur Herstellung einer Unterlage nach einem der vorangehenden Ansprüche, gekennzeichnet durch die Tatsache, daß man
- in einem ersten Schritt die flüssige nutritive Phase herstellt, indem man eine Emulsion verwirklicht, die das Wasser, die Kohlenstoffquelle, die Stickstoffquelle, das Fett und das Calciumoxid umfaßt,
- in einem zweiten Schritt die flüssige nutritive Phase in Kontakt bringt mit dem inerten und porösen Material, so daß die flüssige nutritive Phase im wesentlichen durch das Substrat absorbiert wird, wobei die flüssige nutritive Phase bevorzugt bis 70 Vol.-% des Substrats ausfüllt.
- in einem dritten Schritt das Substrat, das im wesentlichen die flüssige nutritive Phase absorbiert hat, mit festen Partikeln in Kontakt bringt, die aus der Gruppe ausgewählt sind, die insbesondere Sorghum-Mehl, feingehacktes Stroh, das Calciumsulfat und das Calciumcarbonat umfaßt, so daß das Substrat zumindest teilweise diese festen Partikel adsorbiert,
- in einem vierten Schritt das Substrat, das mindestens teilweise die festen Partikel absorbiert hat, sterilisiert, um eine Unterlage zu erhalten, die bereit ist, ein flüssiges Myzelinokulum zu erhalten.

19. Verfahren nach Anspruch 18, gekennzeichnet durch die Tatsache, daß man das Calciumcarbonat und das Calciumsulfat hinzufügt, um bei der Unterlage einen pH nahe 7,5 zu gewährleisten.

20. Verfahren nach einem der Ansprüche 18 oder 19, gekennzeichnet durch die Tatsache, daß man einen Rohrreaktor verwendet, der mit einem spiralförmigen Band ausgerüstet ist und versehen ist mit:
ersten Beschickungsmitteln für das Perlit am Eingang des Reaktors,
zweiten Beschickungmitteln für die Emulsion unterhalb der ersten Mittel,
dritte Beschickungmitteln für die festen Partikel unterhalb der zweiten Mittel.
